Europäisches Patentamt

(19) European Patent Office

Office européen des brevets

(11) Publication number:  **0 195 934**
**B1**

(12) **EUROPEAN PATENT SPECIFICATION**

(45) Date of publication of patent specification: **16.05.90**

(21) Application number: **86102164.0**

(22) Date of filing: **19.02.86**

(51) Int. Cl.⁵: **C 02 F 1/48, B 03 C 1/28**

(54) **Water-treatment device, suitable for being installed in a pipe.**

(30) Priority: **04.03.85 CH 954/85**

(43) Date of publication of application:
**01.10.86 Bulletin 86/40**

(45) Publication of the grant of the patent:
**16.05.90 Bulletin 90/20**

(84) Designated Contracting States:
**AT BE CH DE FR GB IT LI LU NL SE**

(56) References cited:
**US-A-3 923 660**
**US-A-4 153 559**
**US-A-4 216 092**

The file contains technical information
submitted after the application was filed and
not included in this specification

(73) Proprietor: **Grisoni, Angelo**
**Via Francesco Chiesa**
**CH-5833 Vacallo (CH)**

(72) Inventor: **Grisoni, Angelo**
**Via Francesco Chiesa**
**CH-5833 Vacallo (CH)**

(74) Representative: **Dr. Ing. A. Racheli & C.**
**Viale San Michele del Carso, 4**
**I-20144 Milano (IT)**

Courier Press, Leamington Spa, England.

## Description

This present invention relates to a water-treatment device which comprises permanent magnets. This type of apparatus is normally fitted directly inside water pipes.

The USA Patent No. 4,153,559 in the name of Sanderson describes an apparatus for water treatment. It consists of a ferro-magnetic external casing which is inserted in the water pipe by means of couplings made of non-magnetic material. Inside the casing a tube of non-magnetic material is positioned. This tube contains a magnet polarized in such a way to present a succession of positive and negative facing poles.

This document only teaches how to arrange a permanent magnet in a tube in such a way that it results magnetically isolated.

The U.S. patents US-A-3.923.660 and US-A-4.216.092 describe the position of a plurality of magnets arranged one behind the other or one at the side of the other without these magnets ever taking a type of "pair" positioning. These known devices have a limited effectiveness. Moreover, experience has shown that these permanent magnets are consumed by use.

Therefore, the object of this invention is to provide a device for treating water which is both very effective and lasts much longer than those used at present.

The above-mentioned object has been achieved as specified in claim 1.

Further improvements are described in claims 2—5.

It has been noted during experiments that the distribution of the magnetic fields as it is foreseen in the device according to the present invention, is such to produce a modification in the state of the water which flows through it, modification which bears positively on the behaviour of the water when, in contact with warm walls, tends to precipitate.

Under normal conditions, a water of average permanent hardness gives origin to a felted deposit made up of needles of the "aragonite" type.

The same water treated with the device, of the present invention shifts the nature of the calcareous precipitate towards the formation of grains of calcite geometry and swells the average dimension of the aragonite needles.

Both these facts are such to diminish the compactedness of the felted deposit and consequently reduce the thickness of the calcareous deposit on the walls of the tubes, as well as of the containers of the water treated in the way suggested.

This invention will now be explained in more detail using the exemplary embodiment shown in the accompanying drawings, in which:

Fig. 1 is a longitudinal sectional view of the water-treatment device put forward in this patent application, said device comprising two pairs of magnets;

Fig. 1A is a sectional view along line 1a-1a in Fig. 1;

Fig. 2 is a sectional view of a device in which only one pair of magnets has been used;

Figs. 3, 4 and 5 are graphs showing the field intensities produced by pairs of magnets and also their reciprocal position with respect to the points of measurement.

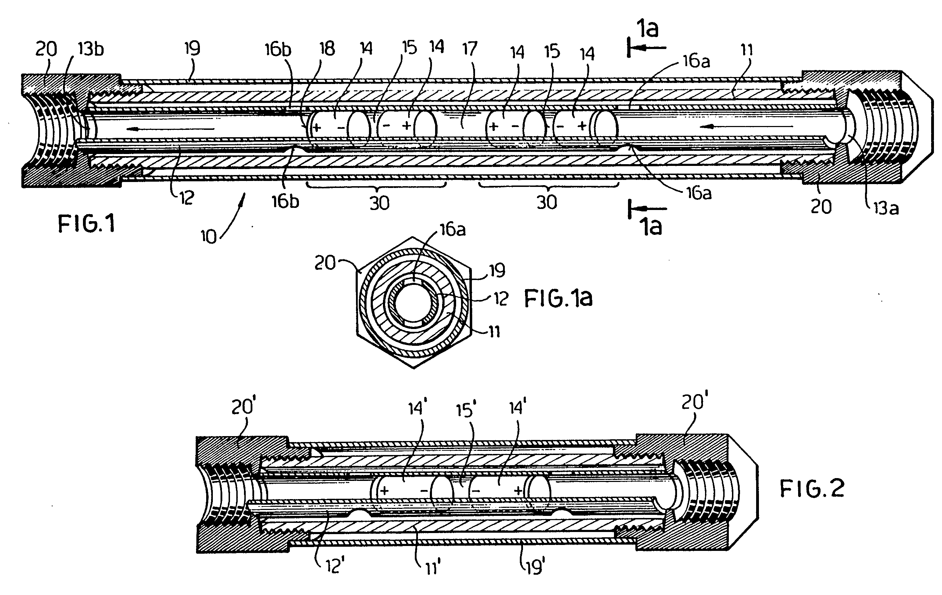

Referring firstly to Fig. 1, the device 10 is here shown inserted in and engaged with the water main pipe (not shown). It is preferable to provide a by-pass for this pipe. In this way interruptions to the supply of water are avoided during periodic maintenance or repairs to the device which is the subject of this invention.

The device proposed has at both ends two couplings 20 made of non-magnetic material. The ends thereof are threaded on the inside and there is also an abutting surface against which the inner iron tube 11 rests.

As be can noted from Fig. 1, the device also comprises inside the iron tube 11 a non-magnetic tubular element 12, which has openings 13a and 13b at the ends and openings 16a and 16b at the sides. Inside the latter are placed four permanent magnets 14, which form two pairs of magnets 30 kept apart by the distance spacer 17 made of non-magnetic material. The length of the distance spacer 17 is such as to ensure that the magnetic field of one pair of magnets 30 does not interfere with that of another pair. The embodiment in Fig. 1 provides for four permanent cylinder-shaped magnets 14. However, a magnet of any other shape may be used. Said magnets 14 of each pair are arranged in such a way that poles with like signs are facing each other and at such a distance apart as to substantially repel one another. In particular, it is preferable for facing, poles to be North poles. A spacing element 15 made of, non-magnetic material, is inserted between the two poles of each pair 30. Disks 18 also made of non-magnetic material, are fixed to the tubular element 12 at the extremity of the end magnets. These disks determine the position of the magnets inside the tubular element 12 and prevent water from filtering into the middle section of the above-said element 12. An outer sleeve pipe is also provided, preferably made of a non-magnetic material.

One particular embodiment provides for said spacing element 15 to be a round piece of wood, for example. If necessary, said spacing element may also be provided by simply arranging for notches in the tubular element 12.

It can be clearly seen that water coming in through the coupling 20 will pass through opening 13a; leave the tubular element 12 through openings 16a; be distributed around the magnetic elements, passing through the magnetic field produced thereby; be conveyed through openings 16b and 13b towards the other coupling 20 and then on to the users. As it passes through, the water is subjected to treatment which greatly improves its quality.

Another embodiment is shown in Fig. 2, in which only two magnets 14' have been used. In this figure all the parts corresponding to those in Fig. 1 are indicated by an apostrophe.

They are made in exactly the same way as that according to Fig. 1. The materials used are likewise identical and the way this embodiment works is therefore similar to that described above.

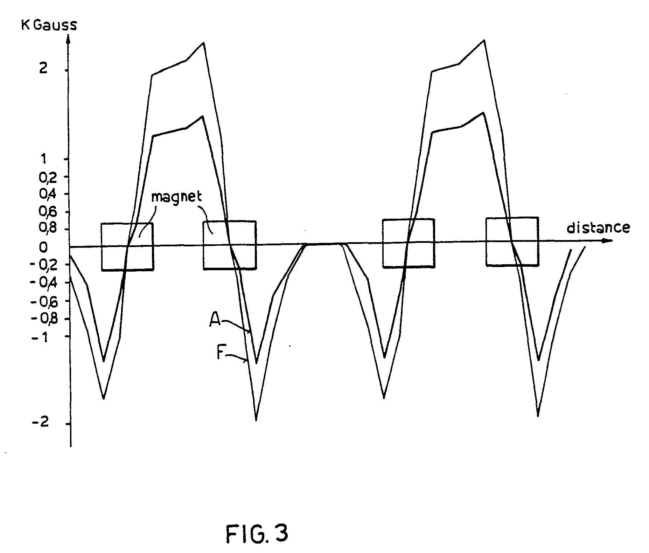

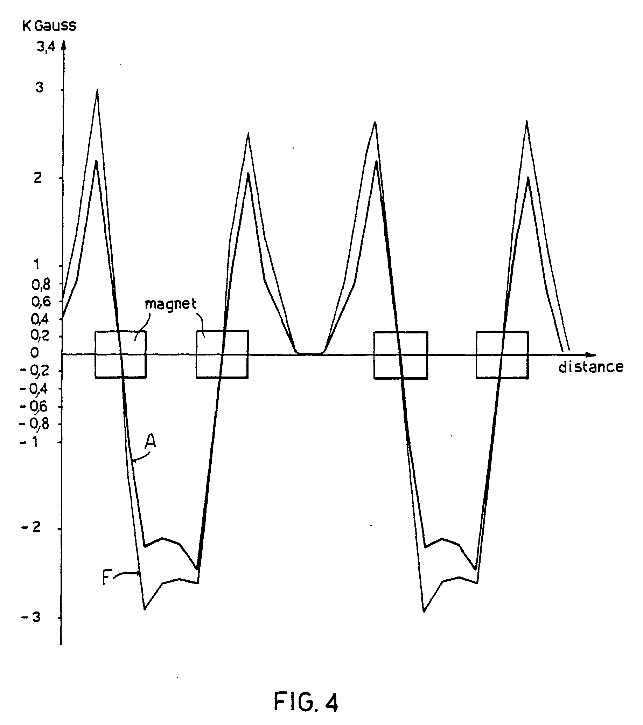

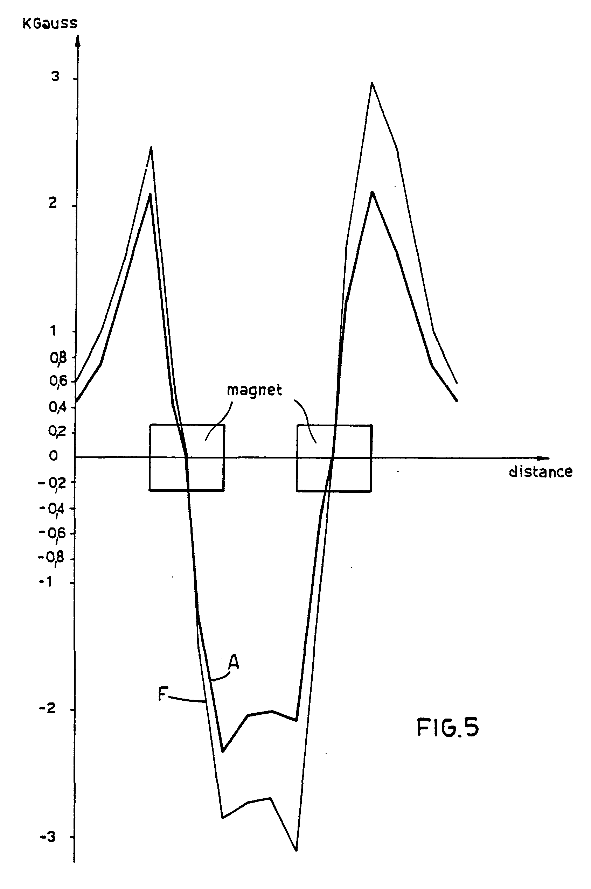

Figs. 3, 4 and 5 show the magnetic field intensities both in the air, that is, in the hollow space between the non-magnetic tube 12 and the iron tube 11 (curve A) and in the iron, that is, in the area of tube 11 (curve F). It will be noted that in the area of the spacer 15 the magnetic field always shows high values, while in the area of spacer 17 the magnetic field intensity is nearly zero.

## Claims

1. A water-treatment device, suitable for being installed in a pipe and comprising a permanent magnetic means (14) wherein a tube (11), made of a ferromagnetic material and magnetically insulated from the rest of the pipe, is provided external to the permanent magnetic means (14) and at a short distance therefrom; the water to be treated flowing between the permanent magnetic means (14) and said tube (11), characterized in that the magnetic means comprise at least one pair (30) of magnets (14) so spaced that like poles face one another and, where more than one pair of magnets are provided, the distance between pairs of neighbouring magnets (30) is such that the field value in the area where the water flows is substantially zero.

2. A device according to clam 1, characterised in that the like poles of the pair of magnets (30) are North poles, whilst the other poles (S) are distant one from the other.

3. A device according to claims 1 or 2, characterized in that there are two pairs of magnets (30) and they are arranged in such a way that the magnetic field produced by each said pair (30) is not influenced by other neighbouring magnetic fields.

4. A device according to any of the preceding claims, characterized in that the distance between the facing poles (N) of like sign of a pair of magnets (30) is such that the field value measured in the flow path of the water adjacent the facing poles is near its maximum value.

5. A device according to any of the preceding claims, characterized in that the distance between two pairs of neighbouring magnets (30) is such that the field value measured in the flow path of the water between the two pairs of neighbouring magnets is substantially zero at at least one point.

## Patentansprüche

1. In ein Rohr passendes Wasserbehandlungsgerät mit einem Dauermagnetmittel (14), bei dem außerhalb des Dauermagnetmittels (14) und in kurzem Abstand desselben ein vom übrigen Rohr magnetisch isoliertes Rohr (11) aus ferromagnetischem Material vorgesehen ist, wobei der zu behandelnde Wasserstrom zwischen dem Dauermagnetmittel (14) und dem Rohr (11) fließt, dadurch gekennzeichnet, daß das Magnetmittel wenigstens ein Paar (30) der Magneten (14) aufweist, die so distanziert sind, daß die gleichen Pole sich gegenüberliegen und, wo mehr als ein Magnetpaar vorgesehen ist, der Abstand zwischen den benachbarten Magnetpaaren (30) so ist, daß der Feldwert im Bereich, wo das Wasser läuft, im wesentlichen null ist.

2. Wasserbehandlungsgerät nach Anspruch 1, dadurch gekennzeichnet, daß die gleichen Pole des Magnetpaars (30) Nordpole sind, während die Pole (S) voneinander distanziert sind.

3. Wasserbehandlungsgerät nach Anspruch 1 oder 2, dadurch gekennzeichnet, daß zwei Magnetpaare (30) vorgesehen sind, die so angeordnet sind, daß das von diesen Paaren (30) erzeugte Magnetfeld nicht von anderen benachbarten Magnetfeldern beeinflußt ist.

4. Wasserbehandlungsgerät nach einem beliebigen vorstehenden Anspruch, dadurch gekennzeichnet, daß der Abstand zwischen den sich gegenüberliegenden Polen (N) desselben Zeichens eines Magnetpaars (30) so ist, daß der gemessene Feldwert auf der Strecke, wo das Wasser nahe den sich gegenüberliegenden Polen fließt, fast seinen Höchstwert erreicht.

5. Wasserbehandlungsgerät nach einem beliebigen vorstehenden Anspruch, dadurch gekennzeichnet, daß der Abstand zwischen zwei benachbarten Magnetpaaren (30) so ist, daß der gemessene Feldwert auf der Strecke, wo das Wasser zwischen zwei benachbarten Magnetpaaren fließt, an wenigstens einer Stelle null ist.

## Revendications

1. Appareil pour le traitement de l'eau à installer dans un tube et comprenant un moyen à aimant permanent (14) où, extérieurement par rapport au moyen à aimant permanent (14) et à brève distance de ce dernier, est prévu un tube (11) en matériau ferromagnétique magnétiquement isolé du reste du tube; le flux d'eau à traiter coule entre le moyen à aimant permanent (14) et ledit tube (11), caractérisé en ce que le moyen à aimant comprend au moins un couple (30) d'aimants (14) distancés de sorte que les pôles semblables sont l'un face à l'autre et, là où plus d'un couple d'aimants est prevu, la distance entre les couples d'aimants adjacents (30) est telle que la valeur du champ de la zone où l'eau coule est pratiquement de zéro.

2. Appareil selon la revendication 1, caractérisé en ce que les pôles semblables du couple (30) d'aimants sont les pôles Nord, tandis que les pôles (S) sont distants l'un de l'autre.

3. Appareil selon les revendications 1 ou 2, caractérisé en ce que les couples (30) d'aimants s'ont au nombre de deux et qu'ils sont disposés de telle sorte que le champ magnétique produit par chacun desdits couples (30) ne soit pas influencé par d'autres champs magnétiques adjacents.

4. Appareil selon n'importe laquelle des revendications précédentes, caractérisé en ce que la distance entre les pôles (N) face à face du mème

signe d'un couple (30) d'aimants est tel que la valeur du champ mesuré dans le parcours où l'eau coule près des pôles face à face est presque à sa valeur maximum.

5. Appareil selon n'importe laquelle des revendications précédentes, caractérisé en ce que la distance entre deux couples d'aimants adjacents (30) est telle que la valeur du champ mesuré dans le parcours où l'eau coule entre les deux couples d'aimants adjacents est pratiquement égale à zéro au moins en un point.

FIG.1

FIG.1a

FIG.2

FIG. 3

FIG. 4

FIG.5